# EUROPEAN PATENT SPECIFICATION

(11) **EP 3 270 181 B1**
(45) Date of publication and mention of the grant of the patent: **09.09.2020**
(21) Application number: 17181472.6
(22) Date of filing: 14.07.2017
(51) Int. Cl.: G01S 15/931, G01S 7/527, G01S 15/14, G01S 15/10

(54) **GENERATING A SIGNAL ENVELOPE**
ERZEUGUNG EINER SIGNALHÜLLKURVE
GÉNÉRATION D'UNE ENVELOPPE DE SIGNAL

(30) Priority: 15.07.2016 IT 201600073992
(43) Date of publication of application: 17.01.2018
(73) Proprietor: Continental Teves AG & Co. OHG, 60488 Frankfurt am Main (DE)
(72) Inventor: BAITINI, Mario, London, W2 6BY (GB); RUSSO, Giuliano, London, W2 6BY (GB); CLERICI, Ubaldo, London, W2 6BY (GB)
(74) Representative: Büchner, Jörg

(56) References cited:
- US-B2- 6 804 168

## Description

### TECHNICAL FIELD

The present disclosure generally relates to the control of sampling of an oscillating signal for reconstructing an envelope of the oscillating signal. More particularly, but not exclusively, it relates to the extraction of a signal envelope from an oscillating signal based on echoes of an ultrasonic waveform.

### BACKGROUND

There are many systems that analyse signals received or generated by the systems by reconstructing the envelope of the signals and then analysing the envelope signals. Examples of such systems include systems for analysing oscillating signals representing echoes of emitted ultrasound pulses. Such a system could for example include a low-speed manoeuvring system such as a vehicle parking assistance system or an ultrasonography system used for medical diagnostics. For the scope of the echo evaluation it is often sufficient to analyse the envelope of the signal.

The signals may be amplitude modulated and the signal envelope may be generated to reconstruct the outline of the amplitude modulated oscillating signal. In the case of a signal representing the echoes of ultrasound pulses, the amplitude of the signal depends on the target position and its capability to reflect the ultrasound signal. For an accurate reconstruction of the envelope, it is desired to sample the oscillating signal in the close proximity of the peaks of the oscillating signal. The phase of the signal depends on the distance to, and characteristics of, targets and it is therefore unpredictable. Moreover, the frequency of the signal may vary with time due to the Doppler effect. The desired sampling times in the close proximity of the peaks can therefore not be pre-determined.

A common method to construct an envelope signal is to insert a diode peak detector in the receiver chain of the system. However, using a diode peak detector involves the use of a capacitor that alters the negative slope of the original envelope. Moreover, the reconstructed signal is not stable and the variability is reflected in the measurement of the envelope. These undesired effects of using a diode peak detector also affect the subsequent analysis of the envelope signal.

An alternative method of reconstructing the envelope of an oscillating signal is to sample the signal at a very high sampling rate. A slow sampling rate causes "aliasing effects" and, from a theoretical point of view, to avoid aliasing effects a sampling rate corresponding to the Nyquist rate' or twice the source frequency is necessary. In many systems for reconstructing the envelope of a signal, hardware able to sample the oscillating at a rate significantly higher than the Nyquist rate is used. This typically involves the use of sophisticated and expensive hardware able to sample the signal at a very high rate, for example sophisticated digital signal processors.

An apparatus for reconstructing the envelope of a signal is disclosed in US 6 804 168 B2.

### BRIEF SUMMARY OF THE DISCLOSURE

In accordance with an aspect of the present disclosure there is provided apparatus comprising: a control arrangement to analyse a portion of an oscillating signal to determine a value indicative of a frequency or at least a part of a period of the oscillating signal and to use said value to schedule sampling of the signal within a time period within a cycle of the oscillating signal, corresponding to a region around a maximum deviation from a reference value within that cycle, to obtain a sample for reconstructing an envelope of the oscillating signal.

The value indicative of a frequency or at least a part of a period of the oscillating signal may correspond to a value indicative of a local frequency or part of a local period. The period may change slowly with time and the control arrangement carries out the analysis to determine the current or local period or frequency of the signal. By analysing the signal to obtain a value for part of the period or frequency, the timing of a subsequent peak of the oscillating signal can accurately be estimated and the oscillating signal can be sampled at, or in close proximity to, the actual subsequent peak.

The portion of the oscillating signal may comprise at least a portion of a first cycle of the oscillating signal, the value may comprise a first value and the time period may comprise a time period within a second cycle, after the first cycle, and the control arrangement may further be adapted to analyse at least a portion of the second cycle of the oscillating signal to obtain a second value and use the second value to schedule sampling of the signal with in a time period in a third cycle, after the second cycle, corresponding to a region around another maximum deviation from a reference value.

In other words, the apparatus may analyse later cycles to obtain new values for the local frequency or part of the period to estimate the timing of later peaks and sample the signal accordingly to build up samples for the envelope signal. Consequently, the apparatus allows an envelope signal to be generated by sampling an oscillating signal at, or in close proximity to, the peaks even though the timing of the peaks cannot be predetermined. Accordingly, the apparatus allows the envelope signal for the oscillating signal to be generated by sampling the oscillating signal at a rate corresponding to the nominal frequency of the oscillating signal. Moreover, the resulting envelope signal provides an accurate reconstruction of the envelope of the oscillating signal.

To schedule sampling of the signal in the second cycle, the control arrangement may use the first value and also a previous measurement and/or estimate for the part of the period or the frequency. To schedule sampling of the signal in the third cycle, the control arrangement may use, in addition to the second value, the first value to estimate the timing of the maximum deviation. It may also, or alternatively, use previous measurements and/or estimates for the part of the period or the frequency. By using more than one value for the period/frequency to estimate the timing of a future maximum deviation, the control arrangement allows a smoothing evaluation of changes to the frequency/period of the signal which may provide a better estimate of the future frequency/period and therefore the timing of the future maximum deviation. The smoothing evaluation may for example be implemented by applying a digital filter to the determined values.

In some embodiments, the control arrangement may be adapted to calculate a first average of at least the first value and a previous value indicative of a frequency or at least a part of a period of the oscillating signal to use the first average to schedule sampling of the signal at a time in the second cycle. The control arrangement may further be adapted to calculate a second average of the second value and the first value, or the second value and the first average, and use the second average to schedule sampling of the signal at a time in the third cycle.

Analysing the portion of the oscillating signal may comprise timing the portion of the signal. It may comprise detecting two events in the oscillating signal and measuring the time between the two events. The two events may be synchronisation time points corresponding to where the value of the oscillating signal crosses a threshold corresponding to the reference value.

The maximum deviation from a reference value may be a maximum deviation within a cycle immediately following a cycle comprising the analysed portion. The maximum deviation may be a positive or a negative peak of the oscillating signal, depending on whether the positive or negative envelope signal is to be obtained. The peak may be located in a portion of the cycle corresponding to the analysed portion in the previous cycle. In other words, the control arrangement may for example analyse the positive semi-period of a cycle to estimate the timing of a positive peak in the next positive semi-period. As another example, the control arrangement may analyse a portion of the negative part of a cycle to estimate the timing of a negative peak in the corresponding portion of the negative part of the next cycle. Consequently, even if the oscillating signal is not symmetrical around the reference value, the timing of the peak may be accurately estimated.

The control arrangement may be configured to schedule the sampling at a time interval after a synchronisation time point. The time interval may be derived from the value indicative of a frequency or at least a part of a period of the oscillating signal. More specifically, in some implementations, the time interval may be derived from an average value calculated from the value indicative of a part of a period and a previous average, estimate or measurement for part of the period. The time interval may be calculated as a fraction of the average. In other implementations, the time interval may be equal to, or calculated as a fraction of, the value indicative of a part of a period.

The control arrangement may be configured to determine a synchronisation time point as a time when the oscillating signal crosses a threshold value corresponding to the reference value.

The control arrangement may comprise a timer to schedule the sampling at the end of said time interval measured from the synchronisation time point. The control arrangement may be configured to set the timer to overflow at the end of the time interval and the control arrangement may be arranged to control a converter to sample the signal when the timer overflows.

The synchronisation time point may be a first synchronisation time point and the timer may be operable to time said portion of the oscillating signal from a corresponding first synchronisation time point in a previous cycle to a second synchronisation time point in that previous cycle to obtain the value indicative of a frequency or at least a part of the period.

The control arrangement may comprise a comparator to establish the, or each, synchronisation time point based on a comparison of the oscillating signal with a reference signal.

The control arrangement may be configured to trigger an interrupt routine on detection of an event of an output signal of the comparator and the interrupt routine may be arranged to cause the control arrangement to determine the value indicative of a frequency or at least a part of the period and to set the timer accordingly. The event may be a falling or rising edge of the output signal of the comparator. By trigger an interrupt routine, the control arrangement ensures that the estimation of a future peak and the setting of the timer are prioritised and that the timer will be set before the synchronisation time point, with respect to which the timer is set, is detected.

The time interval may correspond to 90 or 270 degrees of a cycle of the oscillating signal. To reconstruct a positive envelope of the oscillating signal, the control arrangement may be configured to schedule the sampling at the end of the time interval, corresponding to 90 degrees or substantially 90 degrees of a cycle, after a synchronisation time point, corresponding to where a rising slope of the oscillating signal crosses the threshold corresponding to the reference value. For a negative envelope, the synchronisation time point may instead correspond to where a falling slope of the oscillating signal crosses the threshold.

The value indicative of a frequency or at least a part of a period may correspond to half a period of the oscillating signal. Alternatively, said value indicative of a frequency or at least a part of a period may correspond to a full period of the oscillating signal. As yet another alternative, it could correspond to a quarter of a period of the oscillating signal.

The apparatus may further comprise an analogue to digital converter (ADC) for sampling the oscillating signal in accordance with the scheduling. The ADC may be implemented as an integrated device together with the other control components inside a single generic integrated circuit (IC) or an application specific integrated circuit (ASIC). Alternatively, some or all of the components of the control arrangement and the ADC may be implemented using discrete electronic components as stand-alone devices.

The apparatus may comprise a microcontroller comprising the control arrangement and the converter.

The control arrangement may further be arranged to trigger an interrupt routine at the end of a conversion of the ADC. The interrupt routine may be arranged to cause the output of the converter to be saved in memory. The output of the converter may be saved in an array or in a variable inside memory to be used for further processing.

The apparatus may further comprise a transducer to transduce the echo of an ultrasonic signal into an electrical signal, the oscillating signal being derived from said electrical signal. Accordingly, embodiments provide sampling of a signal derived from an ultrasonic echo where the sampling is synchronised with the peaks of the signal.

The apparatus may further comprise one or more processors for analysing an envelope of the oscillating signal based on the samples output from the converter to detect objects in the vicinity of the transducer.

According to another aspect of the present disclosure there is provided a system comprising the apparatus. The system may be a vehicle parking assistance system.

According to another aspect of the present disclosure there may be provided a motor vehicle comprising the vehicle parking assistance system.

In accordance with a further aspect of the present disclosure, there is provided a method of generating an envelope signal for an oscillating signal comprising: analysing a portion of the oscillating signal to determine a value indicative of a frequency or at least a part of a period of the oscillating signal; estimating, for a cycle of the oscillating signal, when the oscillating signal will be at a maximum deviation from a reference value within that cycle using the determined value; and sampling the signal in accordance with the estimation.

The frequency or period is a local frequency or period for that portion of the oscillating signal.

Analysing the portion of the oscillating signal may mean timing a part of a cycle of the signal.

The method may repeat the analysing, estimating and sampling for later cycles to obtain further samples for generating the envelope signal.

The portion may comprise at least a portion of a first cycle and sampling the signal may generate a sample for a second cycle, after the first cycle, and the method may further comprise analysing at least a portion of a second cycle, predicting when the signal will be at a maximum deviation in a third cycle, after the second cycle, based on a value indicative of a frequency or at least a part of a period of the oscillating signal obtained from the analysis of said at least a portion and of the second cycle and sampling the signal to generate a sample for the third cycle, the envelope signal being represented by samples comprising the samples from the second and third cycle.

The method may comprise applying a moving average to the obtained values indicative of the part of the period or the frequency of the oscillating signal.

The method may further comprise determining a synchronisation time point and estimating when the signal will be at a maximum deviation may comprise estimating the time, with respect to the synchronisation time point, when the signal will be at a maximum deviation from a reference value.

The method may further comprise setting a timer to trigger the sampling at the predicted maximum deviation.

The method may further comprise comparing the oscillating signal with a reference signal and determining the synchronisation time point as a time when the oscillating signal has the same value or substantially the same value as the reference signal.

Estimating when the oscillating signal will be at a maximum deviation may comprise estimating that the value of the oscillating signal will be at a maximum deviation from a reference value a time interval corresponding to a quarter or three quarters of a period of the oscillating signal, based on the value indicative of a frequency or at least a part of a period of the oscillating signal, from the synchronisation time point.

Sampling the signal may comprise using an analogue to digital converter ADC to sample the signal and the method may further comprise triggering an interrupt routine at the end of a conversion of the ADC, the interrupt routine triggering the output of the converter to be saved in a memory.

The value indicative of a frequency or at least part of a period may correspond to half a period or a full period of the oscillating signal.

The method may further comprise receiving the oscillating signal from an ultrasonic transducer.

It will be appreciated that the method can further comprise any process or operation as described with reference to the hereinbefore described apparatus.

According to another aspect of the present disclosure there is further provided a method of detecting objects capable of reflecting an ultrasonic signal comprising: generating an envelope signal, as described above, from an oscillating signal based on reflections of the ultrasonic signal from the objects and analysing the envelope signal to detect the objects.

In accordance with yet a further aspect of the present disclosure, there is provided a computer program comprising instructions that when executed by one or more processors cause the one or more processors to carry out the method described above. In accordance with yet another aspect of the present disclosure, there is provided a computer-readable medium having the computer program stored thereon. The computer-readable medium may be a non-transient computer-readable medium.

According to a further aspect of the present disclosure, there is provided an apparatus for reconstructing an envelope of an oscillating signal comprising: means for timing a portion of the oscillating signal to determine a value indicative of a frequency or a duration of at least a part of a cycle of the oscillating signal; and means for scheduling sampling of the oscillating signal, using said determined value, at a time within a cycle corresponding to an expected maximum deviation from a reference value within that cycle to obtain a sample of the signal for reconstructing the envelope.

### BRIEF DESCRIPTION OF THE DRAWINGS

Embodiments described herein are illustrated, without limitation, by way of example, in the accompanying drawings, in which;
Figure 1 is a schematic diagram of a system for generating, detecting and analysing an ultrasound signal;
Figures 2a and 2b show graphs illustrating the operation of some embodiments of the system shown in Figure 1;
Figure 3 is a schematic diagram also illustrating the operation of some embodiments of the system shown in Figure 1;
Figure 4 schematically illustrates an implementation of apparatus for use in some embodiments of the system of Figure 1;
Figure 5 is a timing diagram showing an example of a way of operating the apparatus shown in Figure 4;
Figure 6 is another timing diagram showing an example of a way of operating a modified version of the apparatus of Figure 4;
Figure 7 illustrate the components of a memory in, or used with, the apparatus of Figure 4 in some embodiments;
Figure 8 illustrates a flow chart for an example of a method of sampling a signal to generate a signal envelope; and
Figure 9 schematically illustrates a motor vehicle comprising the system of Figure 1.

### DETAILED DESCRIPTION

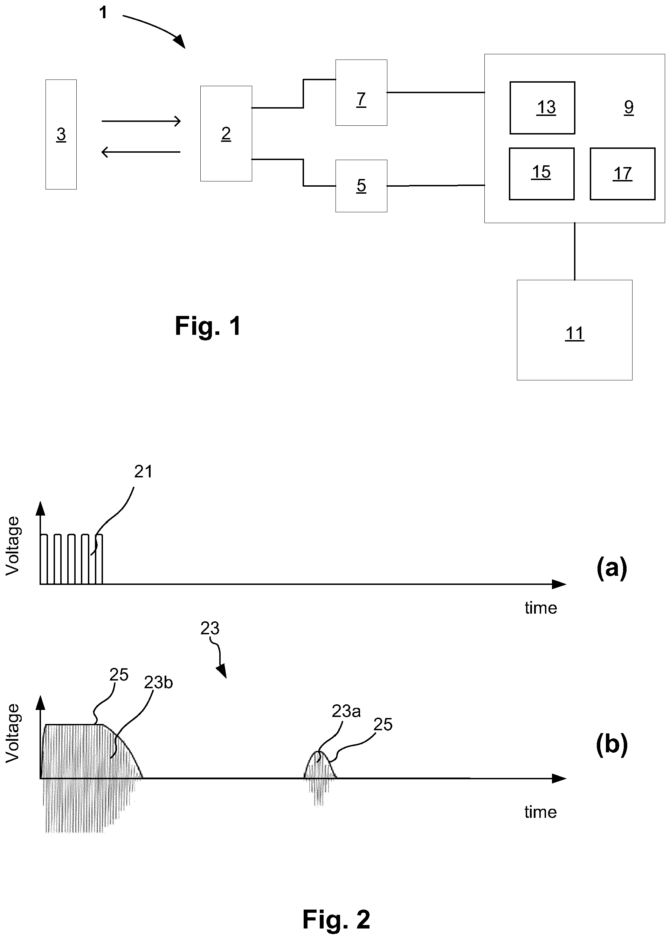

Figure 1 schematically illustrates a system 1 for generating, detecting and analysing an ultrasound signal. The system may for example be an automatic or semi-automatic vehicle parking assistance system. The system 1 comprises one or more transducers 2 that can be used in turn to transmit an ultrasonic signal and receive the echo reflected back by an object 3. The transducer may be a piezoelectric transducer. In transmit mode, electrical excitation of the transducer generates acoustic waveforms. In receive mode, the transducer converts received acoustic signals into electric signals. The system comprises a transmit chain comprising for example a driver 5 for generating a burst of ultrasound pulses. The system also comprises a receive chain comprising for example an amplifier 7 for amplifying the received signal. The transmit and receive chains may also comprise additional components. The system 1 also comprises a processing and control arrangement 9 for processing the received signal and for controlling the driver 5. The processing and control arrangement 9 reconstructs the envelope of the oscillating electrical signal received from the transducer. Furthermore, the system comprises a data analyser 11 for evaluating the echo.

The evaluation of the echo is based upon the signal envelope. The data analyser 11 may receive the envelope signal or a digital signal derived from the envelope signal from the processing and control arrangement 9 and analyse the signal received. For example, if the system is an automatic or semi-automatic vehicle parking assistance system installed in a vehicle, the data analyser may determine the presence of and/or distance to an object 3, in the proximity of a bumper of the vehicle, reflecting the ultrasonic pulses from the envelope signal. It may do this by detecting rising and/or falling slopes of the envelope signal and whether the envelope signal exceeds an object detection trigger value. The objects detected by the vehicle parking assistance system may for example include other vehicles or a kerb. The data analyser 11 may be formed by one or more processors and associated memory. It may for example be provided by a microprocessor. The data analyser 11 may be combined with the processing and control arrangement 9 or it may be separate from the processing and control arrangement. In some systems, it may be located remotely from the processing and control arrangement.

The processing and control arrangement 9 comprises a control arrangement 13 and an analogue to digital converter (ADC) 15. The control arrangement 13 controls the ADC to sample the amplified signal at appropriate times. The processing and control arrangement 9 also comprises a memory 17 for storing the output of the ADC. The memory may be a random access memory. The samples output from the ADC may be stored in an array or a variable inside the memory to be used for further processing. The values in the memory may then be read out and provided to the data analyser 11. The values output from the ADC and stored in memory 17 provide the envelope signal representing the envelope of the oscillating input signal.

Figures 2a and 2b illustrate signals transmitted, received and generated by the system of Figure 1. In the graphs of Figures 2a and 2b, the magnitude of the signals represents the voltage of the signals. As shown in the graphs, the voltage of the signals varies with time. With reference to Figure 2a, a transducer of the one or more transducers generate and emit a burst of ultrasound pulses 21. The pulses are reflected by the object and the same or another transducer of the one or more transducers 2 generate an oscillating electrical signal from the reflected echo. With reference to Figure 2b, an electrical signal 23, based on the amplified output of the transducer, typically comprises both a component 23a based on echoes reflected from an object and a component 23b based on unwanted residual oscillations of the transducer. The unwanted residual oscillations decay with time as shown in Figure 2b. In some implementations, the 'nominal' frequency of the oscillating signal is obtained from measuring the natural frequency during the decay time. Once the unwanted residual oscillations have decayed sufficiently, objects may be detected, in some implementations, by detecting a positive slope of the oscillating signal with a value that exceeds a predetermined amplitude threshold. The oscillating signal is a sinusoidal wave modulated in amplitude. The amplitude of the echoes and the electronic signal representing the echo depends on the target position and the capability of the target to reflect the ultrasound pulses. The phase of the reflected ultrasound signal, and therefore the transduced oscillating signal, also depend on the target location and the target characteristics. The frequency of the sinusoidal carrier is related to the frequency of the ultrasound pulses being transmitted but the frequency can change slightly with time due to environmental disturbances such as relative target speed and air turbulence. The frequency may change with the relative movement of the target with respect to the system as a result of the Doppler effect. Moreover, the targets may cause multiple reflections, causing a distortion in the frequency of the electronic signal output from the transducer.

With respect to Figure 2b, the processing and control arrangement 9 reconstructs the envelope 25 of the oscillating signal. For the evaluation of the echo, the envelope of the oscillating signal is sufficient. To construct an envelope signal that correctly reflects the envelope of the oscillating signal, it may be desired to sample the peaks of the waveform of the oscillating signal. Depending on whether an upper or lower, or positive or negative, envelope, is desired, the ADC may be controlled to sample the positive peaks or the negative peaks. The positive and negative peaks in each cycle correspond to the points of maximum deviation of the signal from a reference value of that cycle. Since the frequency of the oscillating signal 23 may vary slightly with time, the distance and time between two peaks may also change slightly with time. In some embodiments, the control arrangement 13 is arranged to estimate the timing of the peaks, based on analysis of the signal, and control sampling of the signal accordingly.

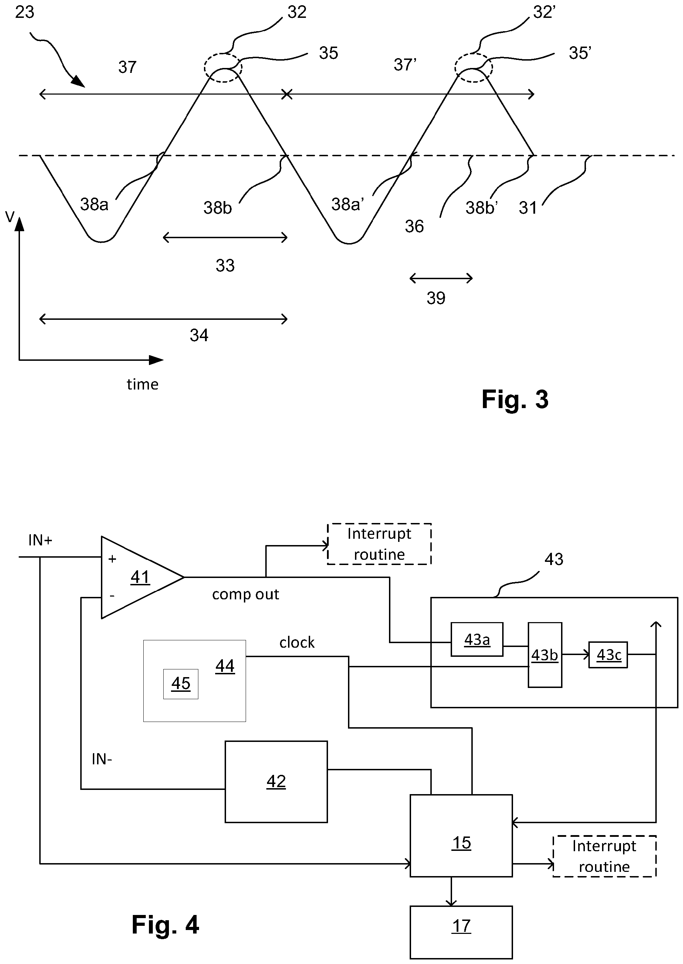

With reference to Figure 3, an expanded view of two cycles 37, 37' of the oscillating signal 23 is shown. The signal is an oscillating voltage signal that oscillates around a reference value 31 providing a reference threshold. The reference voltage value 31 may be any suitable reference value around which the oscillating signal produced by the system 1 oscillates. As a non-limiting examples, the reference value may for example be 0 Volts (V) or 1V. The part of the signal shown in Figure 3 has two regions of maximum deviation 32, 32' from the reference value comprising maximum deviations in the form of positive peaks 35, 35', each in a respective cycle. Since the frequency of the oscillating signal can vary with time, according to some embodiments, the control arrangement 13 analyses a portion 33 of the signal to obtain a value indicative of at least a part of a period 34 of the oscillating signal at that time. The obtained value may correspond to the duration of at least a part of a cycle 37 of the oscillating signal. The value is then used to schedule sampling of the oscillating signal at a time 36 during a time period within the subsequent cycle 37' corresponding to the region of maximum deviation 32' of that cycle. The value may be used to derive an estimated duration of a fraction of the subsequent cycle 37' and the estimate may be used to schedule the sampling at the time 36 within the time period corresponding to the region of maximum deviation 32', as will be described in more detail below.

The control arrangement may not analyse a full period. It may only analyse a portion of a cycle. The portion of the signal may for example be a quarter, half or a full period and the control arrangement 13 may measure the time from the start to the end of that portion. For example, if the control arrangement measures the duration of half a cycle, the measurement may be used as, or contribute to, an estimate for a corresponding semi-period or a different semi-period in a subsequent cycle. In Figure 3, the portion 33 is a half of a period corresponding to the half of the period during which the value of the signal is higher than the reference value 31. The analysed portion of the signal may be longer than the fraction of the period in the next cycle for which an estimate is then obtained. The measured value may be adjusted to derive the estimate for the next cycle. In some embodiments, a moving average of a number of previous measurements is calculated to estimate the duration of a part of the subsequent cycle. The value indicative of a period may be stored as the duration of the portion of the cycle measured. For example, the value may comprise the number of timer counts of a counter, or the number of microseconds, over which the portion, for example half of a cycle, extends in time. Alternatively, the measured value may be extrapolated and stored as the duration of a full cycle or as a frequency of the signal.

The value indicative of at least a part of a period is also indicative of, or as indicated above can be used to derive, the frequency of the signal. In some embodiments, instead of measuring the duration of part of a cycle, the control arrangement may analyse a portion of the signal to obtain a value indicative of a frequency of the oscillating signal. Alternatively, it may measure the duration of the part of the cycle and use that value to derive the frequency. The local frequency value can then be used to estimate the timing of a peak in a subsequent cycle. The value indicative of a frequency or at least a part of a period is indicative of a local frequency or period and it may be different to the frequency or period of the signal in a later cycle but the frequency and period are only expected to vary slowly and the local frequency or period is therefore a good estimate of the frequency or period for a subsequent cycle.

As indicated above, based on the obtained value, the control arrangement 13 then estimates when a subsequent maximum deviation 35' from the reference value will occur. It may determine the expected time 36 of a maximum deviation, for example a peak, in the cycle 37' following the end of the analysed portion 33. The next cycle 37' may be measured directly from the end of the analysed portion or from a later time marker, as shown in Figure 3. Alternatively, it may be for a cycle that will follow at some time later. Since the frequency may change, the predicted maximum deviation may not coincide exactly with the actual maximum deviation 35'. However, it will be within a region around the maximum deviation 32'.

The control arrangement may determine a number of synchronisation time points 38a, 38b, 38a', 38b' and the estimated time 36 of a subsequent maximum deviation may be determined as a time interval 39 measured from one of the synchronisation time points. The synchronisation time points may be determined as events in the oscillating signal corresponding to where the signal crosses the reference threshold set by the reference value 31. In other words, the synchronisation time points may be determined where the value of the signal changes from higher to lower than the reference value or from lower to higher than the reference value. As shown in Figure 3, a cycle 37' may have a first and a second synchronisation points 38a' and 38b' corresponding to where a rising slope of the signal crosses the threshold and a falling slope of the signal crosses the threshold respectively. As further shown in Figure 3, the sampling may be scheduled with respect to the first synchronisation point 38a' so that the time interval 39 to the sampling time is measured from the first synchronisation point 38a'.

The analysed portion 33 may be a portion of the signal between two time synchronisation time points 38a, 38b in the previous cycle 37. The value indicative of at least a part of the period can then be determined as the time lapse between the two synchronisation time points. As indicated above, the measurement indicative of at least a part of a period can be used to estimate a duration of a fraction of the subsequent cycle 37' and the time interval 39 between the synchronisation time point and the sampling time is equal to, or derived, from this estimate.

The time interval between a synchronisation time point and the sampling time, corresponding to the estimated time 36 of a subsequent maximum deviation, may for example be a time interval corresponding to 90 or 270 degrees of a cycle from a particular synchronisation time point. As is indicated in Figure 3, the time interval 39 corresponds to 90 degrees from a synchronisation time point 38a'. The time interval corresponding to 90 or 270 degrees can be determined by recognising that the full cycle or the period corresponds to 360 degrees and determining the fraction of the period corresponding to 90 or 270 degrees, i.e. % or ¾ of the period. Moreover, it will be appreciated that the peak 35' is located 90 degrees from the first synchronisation time point 38a' in the cycle, where the positive slope of the oscillating signal crosses the reference threshold, and 270 degrees from the second synchronisation time point 38b in the previous cycle, where the negative slope of the oscillating signal crosses the reference threshold. The time interval to the sampling time is set and measured from an appropriate synchronisation time point selected according to the implementation. Accordingly, in some embodiments, the sampling time may alternatively be scheduled from the second synchronisation time point 38b in the previous cycle.

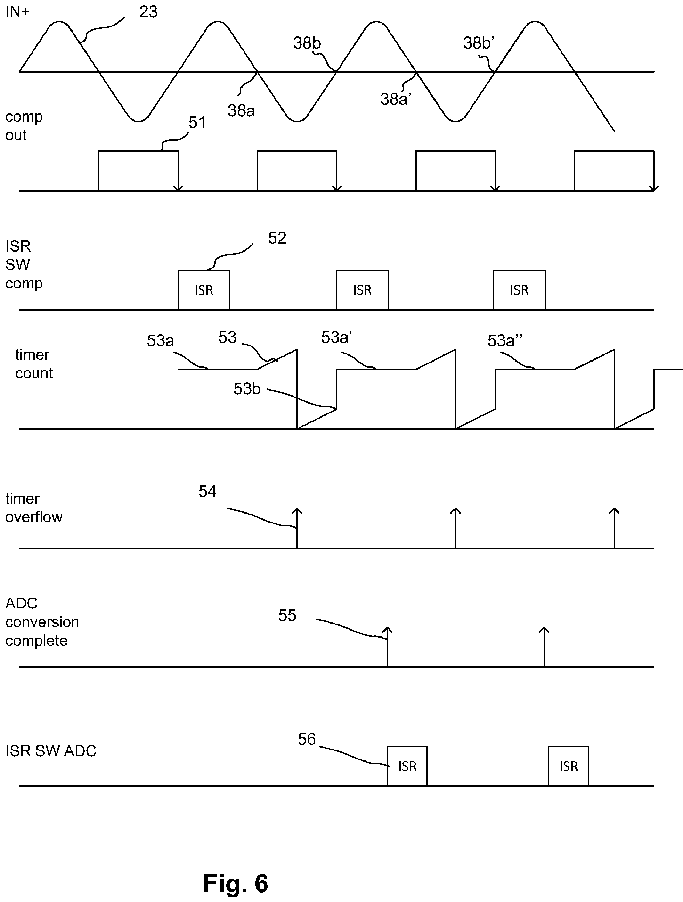

The control arrangement 13 can then control the ADC 15 to sample the signal at the estimated time 36. By taking each sample in the close proximity of the oscillating signal peaks, the envelope can be successfully reconstructed. Although the maximum deviation from the reference value has been described with respect to a positive peak in Figure 3, it will be appreciated that in an inverted implementation, the negative peaks of the waveform may be sampled instead of the positive peaks. The time interval to a negative peak can be measured as 270 degrees from a first synchronisation point 38a, 38a', where the positive slope of the oscillating signal crosses the reference threshold, or 90 degrees from the next synchronisation point 38b, 38b, where the negative slope of the oscillating signal crosses the reference threshold. Alternatively, sampling of negative peaks can be carried out according to synchronisation time points as will be described with respect to Figure 6 below.

By using the mechanism described above, slow changes in the frequency of the signal for which the envelope is reconstructed can be 'followed' by the system with a delay of no more than a period. By monitoring the signal and changing the scheduling accordingly, the sampling is synchronised with the peaks. The mechanisms allows for the reconstruction of the envelope for signals for which the sampling time cannot be pre-determined, for example, in the case of an echo signal, because the phase of the signal depends on the objects reflecting the ultrasound pulses and cannot be predicted and the frequency of the signal can vary. The mechanisms can be used to reconstruct the envelope of any signal with slow changes in frequency and can be used in various systems including also diagnostic or target Doppler systems.

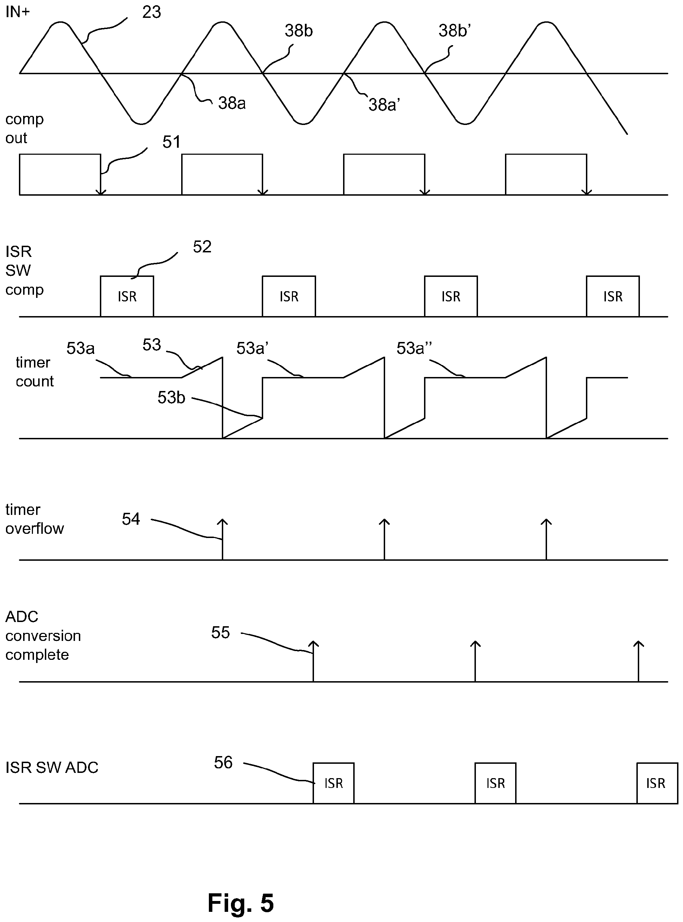

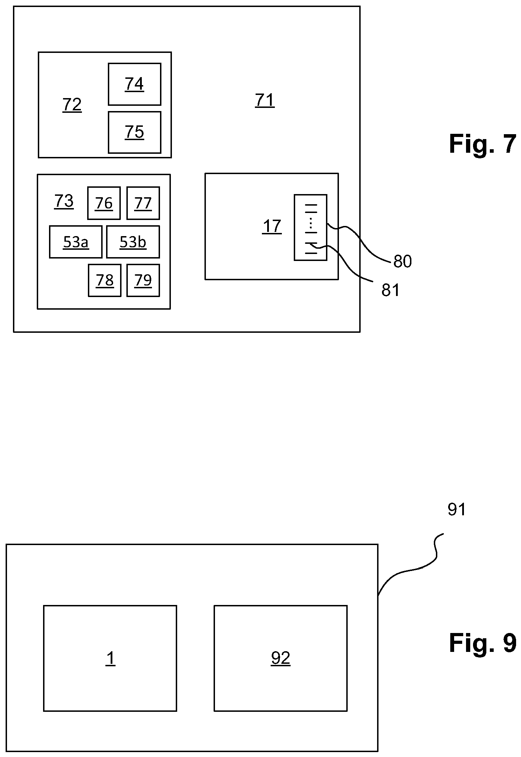

A specific implementation of components for obtaining an envelope signal and their operation will now be described with respect to Figures 4 and 5. The components comprises a comparator 41, a voltage reference module 42 and a timer 43. The components also comprises one or more processors 44. The one or more processors comprises a clock 45 that outputs a clock signal to at least some of the other components. The comparator 41, the voltage reference module 42, the timer 43 and the one or more processors 44 can be considered to form part of the control arrangement 13 described with respect to Figure 1. The components also comprises the converter 15 in the form of an ADC and the memory 17 for storing the sampled values in the form of random access memory (RAM). The one or more processors also have internal and/or external memory and/or storage, such as caches, RAM and read only memory (ROM). The memory may store computer program instructions executed by one or more of the one or more processors and data accessed by the one or more processors, as will be described in more detail with respect to Figure 7. The components may be implemented in software or hardware or a combination of software and hardware. The components may be implemented as logic parts inside a generic microprocessor or inside an application specific integrated circuit (ASIC). The microprocessor or the ASIC would then be formed by at least the components shown in Figure 4. Alternatively, some or all of the components may be implemented using discrete electronic components as stand-alone devices.

The comparator 41 has two inputs. In order to generate a positive signal envelope, the oscillating signal IN+ is provided to the positive input of the comparator. For example, the oscillating signal may be the oscillating signal 23 from the amplifier of Figure 1, representing the echo of an ultrasonic signal. The negative input of the comparator 41 receives a voltage reference signal IN- generated by the voltage reference module 42. The reference voltage of the voltage reference signal is selected to match the voltage value around which the oscillating signal received from the transducer and amplifier oscillates.

The comparator compares the voltage value of the oscillating signal IN+ to the voltage reference signal IN- and outputs a high value when the value of the oscillating signal is greater than the value of the voltage reference signal and a low value when the value of the oscillating signal is lower than the value of the voltage reference signal. The oscillating signal IN+ 23 and the output signal 51 of the comparator (comp out) are shown in Figure 5. It is clear from Figure 5 that the output signal from the comparator either has a high or a low value and the value changes from high to low or from low to high where the oscillating signal is equal to, or crosses, the voltage reference signal selected to match the voltage value around which the oscillating signal oscillates. The timing of the shift from high to low and low to high establish the synchronisation time points 38a, 38b, 38a', 38b' described with respect to Figure 3.

As discussed with respect to Figure 3, in embodiments, to predict the time of the next maximum deviation to be sampled, it is desired that the system knows the period of the signal or the duration of at least a fraction of a cycle. The sampling can then be scheduled a fraction of a period from a synchronisation time point established by the comparator output signal. For example, using the components of Figure 4, it can be scheduled 90 degrees from a rising edge of the comparator output signal to sample a positive peak of the oscillating signal. The timer 43 of Figure 4 is used to count a time interval corresponding to the fraction of the period from the synchronisation time points. The period of the signal can be determined in various ways. For example, as mentioned with respect to Figure 3, the time between two synchronisation time points can be measured by the processor. In some implementations, the timer is also used to determine the fraction of the period as will be described below.

The timer 43 receives the output signal 51 of the comparator. The timer comprises a counter that counts the pulses of the clock signal from the one or more processors 44. When the register of the counter overflows, the timer causes an event to be triggered, in this case the sampling of the oscillating signal. The counter value 53 of the timer 43 is shown in Figure 5. In the specific implementation of Figure 5, a falling edge of the output signal 51 of the comparator causes the control arrangement 13 to estimate a value 53a which will cause the counter to overflow at, or in the close proximity to, an appropriate maximum deviation. The counter is only allowed to start counting, from the estimated value 53a, at the next rising edge of the output signal 51 of the comparator. Consequently, the value 53a is determined by subtracting, from the register overflow value, the number of counts the counter will make during the time interval between the rising edge of the output signal of the comparator and the expected timing of the maximum deviation to be sampled. Accordingly, in the implementation of Figure 5, the timer is used to schedule the sampling from a synchronisation time point corresponding to a rising edge of the comparator output signal, as will also be described in more detail below.

As indicated in Figures 4 and 5, in some implementations, the falling edge of the output signal from the comparator may trigger an interrupt service routine (ISR) 52 that involves estimating the timing of the next maximum deviation and setting the timer accordingly. The one or more processors may monitor the output signal of the comparator and set a flag on detection of a falling edge which is used to start the interrupt service routine. As indicated above, estimating the timing of the next maximum deviation can involve estimating the duration of the fraction of the cycle from a synchronisation time point to the next expected maximum deviation.

As mentioned above, the counter remains at the set value 53a until the next rising edge of the comparator output signal. At the next rising edge of the comparator out signal, the counter starts counting pulses of the clock signal and adds to the value 53a. The counter reaches its maximum value at the next expected maximum deviation. The counter then overflows, resets and continues to count. The next falling edge of the comparator output signal then causes the counter to stop counting again at final value 53b.

In embodiments, by using the initial value 53a, from which the counter is set to start counting, and the later value 53b, at which the counter stops counting, the one or more processors 44 can determine the time between when a rising edge of the comparator output signal and the next falling edge of the comparator output signal, corresponding to the positive semi-period of the oscillating signal. It can for example do this by summing the difference between the initial counter value 53a and overflow value of the counter and the difference between the reset value of the counter and the value 53b when the counter stops counting. This measurement indicative of at least a part of a local period can then be used to estimate the timing of the next maximum deviation. More specifically, the one or more processors can use the calculated number of counts corresponding to the semi-period to determine the value 53a' for the next cycle that the counter will need to be set at to overflow at the next predicted maximum deviation of the oscillating signal. In some implementations, the new value 53a' for the next cycle can be obtained by calculating an average of the number of counts corresponding to the most recently measured semi-period and the number of counts corresponding to a previously measured or estimated semi-period. If the control arrangement is designed to sample the signal a time interval corresponding to a quarter of a period after a synchronisation time point corresponding to a rising edge of the output signal 51 of the comparator, the one or more processors divides the average by two. This value provides an estimate of the number of counts the counter will make during the time interval between the rising edge of the output signal of the comparator and the expected timing of the maximum deviation to be sampled. The value may then be subtracted from the register overflow value to obtain the new value 53a' to which the counter will be set. The new counter value 53a' and the later counter value 53b' when the counter stops counting can then be used to obtain yet another new value 53a" to set the counter at in the following cycle. In some implementations, the measured semi-period is halved to obtain a quarter of a period before the averaging function is applied to the current and a previous value. The calculation described accordingly provides a moving average or smoothing filter using current and previous signal period values. In other implementations, an averaging function is not applied and the measured semi-period is used directly to compute the value for the counter in the next cycle.

The ADC 15 is triggered at ADC trigger times 54, corresponding to the overflow of the counter. The sampling is automatically triggered by the overflow of the counter. The ADC has an input for receiving the oscillating signal IN+ 23, an input for receiving a voltage reference signal and an input for receiving the trigger signal from the timer. The ADC has an output for outputting the sampled values. The ADC converts the values of the oscillating signal at the trigger times to digital values. The conversion completes at conversion end times 55 some time after the ADC trigger times. The ADC conversion should be fast enough to be completed before the occurrence of the next positive peak. The end of the conversion may cause another interrupt service routine 56 to copy the value to RAM. Consequently, the ADC may comprise another output for an interrupt service routine trigger signal. The end of the conversion may trigger an interrupt flag to be set via the output and the flag is used to start a suitable interrupt service routine. The interrupt service routine involves storing the result of the analogue to digital conversion in RAM. The results may be stored in an array or in a variable inside memory to be used for further processing. The voltage reference signal is provided to the ADC for proper operation. The voltage reference module 42 is configured to provide two different reference voltage signals comprising a first reference voltage 31 around which the oscillating signal oscillates and a second reference voltage used as positive or negative reference for the ADC 15.

The interrupt service routines (ISR) 52, 56 may be carried out by the one or more processors 44. The interrupt routines are shown separate from the one or more processors 44 in Figure 4, as logical actions, but in some implementations the actions of the routines would be carried out by the processors 44. The comparator output signal and the interrupt service routine trigger signal from the ADC may therefore be provided to the one or more processors 44. The one or more processors may access and execute computer program instructions for carrying out the interrupt services routines. The interrupt services routines are used to cause the one or more processors and other components shown in Figure 4 to prioritise the actions specified by the interrupt service routine and move them to the front of the queue of scheduled tasks. As indicated above, the instructions for the comparator ISR 52 may cause the one or more processors to determine the value indicative of a frequency or at least a part of a period from the values at which the counter starts and stops counting, estimate the timing of a maximum deviation in the next cycle of the oscillating signal, including calculating the value 53a to which the counter should be set to overflow at the right time, and cause the one or more processors to set the counter to the calculated value. The instructions for the ADC ISR 56 may cause the converted value to be read from the ADC and saved in RAM before the next sampling time. Although the process for generating envelope signals has been described to use interrupt routines, it will be appreciated that in some implementations interrupt routines may not be used and the setting of the timer and the saving of the samples will instead be queued. However by using interrupt service routines the system makes sure that the system will be ready to sample the next positive or negative peak and read the sample from the ADC before it is overwritten by the next sample.

The operation of the timer will now be described in more detail. The timer comprises a timer gate 43a, an AND gate 43b and a timer register 43c. The timer gate can be considered an on/off switch for the timer counter. The timer gate controls whether the timer is enabled or disabled. The AND gate receives the comparator output signal and a clock signal. The control arrangement 13 may comprise a prescaler (not shown) for dividing the clock signal from the clock 45 before feeding it to the AND gate 43b. The AND gate outputs a high value when both the clock signal and the comparator output signal have a high value. Since the clock is AND-gated with the comparator output signal, the output from the AND gate 43b is low during the negative semi-period when the comparator output signal is low and consequently the counter does not count during this time. The counter starts counting when the output of the AND gate goes high after the next rising edge of the comparator output signal. The timer register 43c, provides the counter of the timer 43. The timer register is incremented by 1 each time it receives a 'tick' or a pulse from the AND gate 43b. When the timer register reaches its maximum value, it automatically overflows and restart counting from 0. A timer overflow signal is generated when the timer register overflows and the signal is sent to the ADC 15 to cause the ADC to sample the oscillating signal. The counter then stops counting again when the output from the AND gate goes low at the next falling edge of the comparator output signal. Consequently, in addition to triggering the interrupt routine during which the period estimation is performed and timer value is set to be able to sample the next peak correctly, the comparator output signal is also used to start and stop the timer counting. As part of the interrupt routine, the one or more processors 44 may read the counter value 53b at the falling edge of the comparator output signal and use this value in combination with the initial value 53a to which the counter was set to schedule the sampling in order to determine the semi-period of the oscillating signal, as has been described above. The period estimation computation and the setting of the timer can take place when timer counting is disabled and should be completed before the timer restarts counting at the next rising edge.

As mentioned above, in some applications it is desired to sample the negative peak of the sinusoidal wave to reconstruct a negative envelope. With reference to Figure 5, this could for example be done by scheduling the sampling a quarter of a period after a falling edge of the comparator output signal instead, with appropriate modification to the other operations. Alternatively, the timings of the comparator output signal with respect to the oscillating signal can be changed such that the sampling can still be scheduled a quarter of a period after the rising edge of the comparator output signal. This could be achieved with a hardware modification in which the two inputs to the comparator in Figure 4 are reversed. Alternatively, it could be achieved with a software modification to just change the polarity of the output signal of the comparator. The timing diagram associated with this software modification is shown in more detail in Figure 6. In fact, both the hardware modification and the software modification would provide a timing diagram as shown in Figure 6, except that in a timing diagram associated with the hardware modification the oscillating signal would be labelled 'IN-' since the oscillating signal would be input to the negative input of the comparator 41. More specifically, in the hardware modification, since the oscillating signal 23 would be input into the negative input of the comparator 41 and the voltage reference signal would be input into the positive input, the comparator would output a high value when the voltage reference signal is higher than the oscillating signal and a low value when the voltage reference signal is lower than the oscillating signal. The software modification achieves an equivalent comparator output signal by just changing the polarity of the signal at the comparator output such that the comparator output signal is low during the positive semi-period of the oscillating signal and high during the negative semi-period of the oscillating signal. As shown in Figure 6, this means that the timing of the comparator output signal 51 and therefore also the interrupt routines 52, 56, the timer count and the completion of the ADC conversion are shifted by 180 degrees with respect to the oscillating signal 23. A software modification may be chosen over a hardware modification if it is desired that it should be possible to control the system to swap between generating a positive envelope and generating a negative envelope without having to change the connections to the comparator 41. As shown in Figure 6, the modification to the comparator output signal results in that the first synchronisation time point, still established by a rising edge of the output signal of the comparator, now corresponds to where the falling slope of the oscillating signal crosses the reference threshold and the second synchronisation time point, still established by a falling edge of the output signal of the comparator, now corresponds to where a rising slope of the oscillating signal crosses the reference threshold. Consequently, the control arrangement 13 and the ADC 15 will operate as described with respect to Figure 4 and 5, except when the timer overflows a quarter of a cycle from a synchronisation time point 38a, 38a' corresponding to a rising edge of the comparator output signal, the time will correspond to an expected negative peak instead of a positive peak and the ADC will be controlled to reconstruct the negative envelope of the oscillating signal.

With reference to Figure 7, a computer-readable memory 71 is shown. The computer-readable memory may form part of, or be accessible by, a microcontroller comprising the components shown in Figure 4. The at least one computer-readable memory may comprise cache memory, RAM and/or ROM. In a software implementation, the computer-readable memory may comprise instructions 72 which, when executed by the one or more processors 44, cause the one or more processors to carry out at least some of the steps of the methods described herein. The computer-readable memory may also store data 73 needed to implement the process for obtaining the envelope signal. The memory may also comprise the RAM 17 for storing the samples output from the ADC.

In more detail, the instructions 72 may comprise interrupt software routines 74, 75 corresponding to the interrupt routines 52 and 56 described with respect to Figures 5 and 6. The data 73 to implement the process for obtaining the envelope signal may comprise the value 76 indicative of a frequency or at least a part of a period of the signal. This value may be overwritten every cycle. The data 73 may also comprise the value 53a to which the counter is set in order to overflow at the right time and the value 53b of the counter when the counter stops counting. The data 73 may also comprise numerical data 77 for calculating the value 53a to which the counter is set, including a count value for the time interval between the synchronisation time point and the sampling time. Some of these values may also be overwritten every cycle. The data may also include settings corresponding to a voltage reference value 78 for generating the voltage reference signal to the comparator and a voltage reference value 79 for generating the voltage signal to the ADC.

The RAM for storing the envelope signal may comprise an array or variable 80 storing the sampled values 81.

Figure 8 illustrates a flow chart for an example of a method for generating a signal envelope. The method 800 comprises analysing 801 a portion of an input signal and determining 802 a value indicative of part of a current period of the signal from the analysed portion. Determining the value may comprise determining a local positive or negative semi-period of the signal. The method further comprises estimating, for a cycle of the oscillating signal, when a peak will occur in the cycle. This may comprise estimating 803 when a peak will occur with respect to the synchronisation time point. For example, the method may comprise using an average of the value indicative of part of a current period just obtained, and a previous value indicative of a corresponding part of a period in a previous cycle, as an estimate for the corresponding part of the period of the next cycle. The estimation of the peak timing may comprise applying a digital filter to previous measurements of the signal. Estimating the peak timing may also comprise estimating that the peak will occur a quarter of a period from a synchronisation time point and estimating the quarter of the period based on the calculated average from previous measurements. The method may further comprises setting 804 the timer based on the estimated quarter of the period so that the timer will overflow a quarter of a period after a synchronisation time point. The estimated timing may not correspond to the actual timing of the peak since the period may change before the next peak. However, the period would only be expected to change very little on such a short time scale and the estimated peak timing would be fall within a time period corresponding to a region of maximum deviation of the oscillating signal from a reference signal. The method then goes on to detect the synchronisation time point 805 that triggers the counter to start counting and to sample 806 the signal when the timer expires. The method may also comprise storing 807 the sampled values in a memory.

As a specific example of an implementation of operations 803 and 804, in for example a microprocessor or a stand-alone processor implementation, a processor may calculate the local value for a quarter of a period from the register value 53a and 53b and store this as the value of a first variable, 'new value'. The processor may also store a previous estimate for a quarter of a period in a variable 'old value'. The estimation algorithm may comprise checking a flag to see if an existing value for the duration of a quarter a cycle is stored in memory and, if it is, updating the value of 'old value' as the sum of the values of the 'old value' and the 'new value' divided by two. This updated value then forms the estimate of a quarter of a period of the next cycle. As a specific non-limiting numerical example, if the new value for the quarter of a period is 44 counts and the old value is 40 counts, the calculated estimate for the next cycle will be 42 counts. The processor, or another processor, may then calculate the difference between the overflow value of the register and the value of the variable 'old value' and set the timer register to the calculated difference 53a. For example, continuing with the non-limiting numerical example above, if the overflow value is 255, the processor may set the timer to a value of 214. When the next measurement is obtained, it may overwrite the value of 'new value' with the new count value for a quarter of a period and the process may repeat.

Continuing with this example of a specific algorithm, the first time a signal is sampled, the flag may be set to indicate that a value for the quarter of a period does not exist. The algorithm, having checked the flag, may initialise the value of 'old value' as a default period divided by four, set the flag to indicate that a value for the quarter of a period now exists and set the timer register to the difference between the overflow value and the value of the 'old value'. In the next loop through the algorithm, triggered by the next falling edge of the comparator output signal, a processor will calculate a new local value for a quarter of the period and add this to the value stored in the 'old value' variable to obtain a new estimate for a quarter of the period of the next cycle as described above. The default period may be obtained as the inverse of the transducer natural frequency divided by the period of the clock signal provided to the timer. Continuing with the non-limiting numerical example above, if the transducer natural period is 48KHz and the period of the clock signal is 125ns, the default period would correspond to approximately 167 counts.

It will be appreciated that the above example is just one example and other implementations of operations 803 and 804 are contemplated. For example, although it has been described that the new count value is obtained by dividing the measured semi-period by two, in some implementations, the counter value 53b may be used directly as the count value for a quarter of a local period. Calculating the semi-period and halving this value may provide a better estimate if the peak is not located exactly in the middle of the half cycle analysed. Moreover, in some implementations, as mentioned above, the timer may time a full period and the processor may estimate the time interval from the synchronisation time point to the sampling time as a moving average of a quarter of the measured full period. However, in cases where the oscillating signal is not symmetrical around the reference value, such that for example the positive half period may be longer than the negative half period, only timing half the period corresponding to the half of the cycle in which the sample will be obtained may give a better estimate. By timing half the cycle and then scheduling the sampling in the next corresponding half of the cycle, the timing of the peak can be accurately estimated irrespective of whether the signal is symmetrical around the reference value. In some implementations, an averaging function may not be used and the current and previous values may instead be combined in a different way. In yet other implementations, the time interval from the synchronisation time point to the sampling time may be estimated from only the last obtained value. For example, the timer register may be set to the difference between the overflow value and the measured or calculated value for the quarter of the local period in the last cycle.

It will be appreciated that the process of Figure 8 is only the process for sampling the oscillating signal once. The process is repeated to obtain further samples and the accumulated samples in memory together form the envelope signal. It will be appreciated that some of the later operations of Figure 8 for a current cycle may happen before some of the earlier operations of Figure 8 for the next cycle. For example, the sampling operation 807 of the signal in a current cycle will happen during the analysis operation 801 of the current cycle for obtaining a sample in the next cycle.

Although it has been described that the determined indication of a period is used to sample the oscillating signal in the next cycle, the indication of a period may be used in any subsequent cycle. For example, in some implementations, the oscillating signal may be analysed less frequently and the determined period may be used to sample a number of cycles before an updated indication of the period is obtained.

In some embodiments, some respective steps of the method may be carried out or controlled by respective processors. In other embodiments, the steps may be carried out or controlled sequentially by the same processor.

The method described herein therefore provides a method of obtaining an accurate reconstruction of the signal envelope using a simpler processing method and accordingly cheaper components, than for example a system obtaining the signal envelope by sampling at a rate much higher than the Nyquist rate. The method permits to reconstruct the envelope by sampling the signal peak at a conversion rate equal to the nominal frequency of the oscillating signal. Consequently, the method allows the envelope to be reconstructed without the use of sophisticated and expensive digital signal processors that can sample at a very high rate above the Nyquist rate.

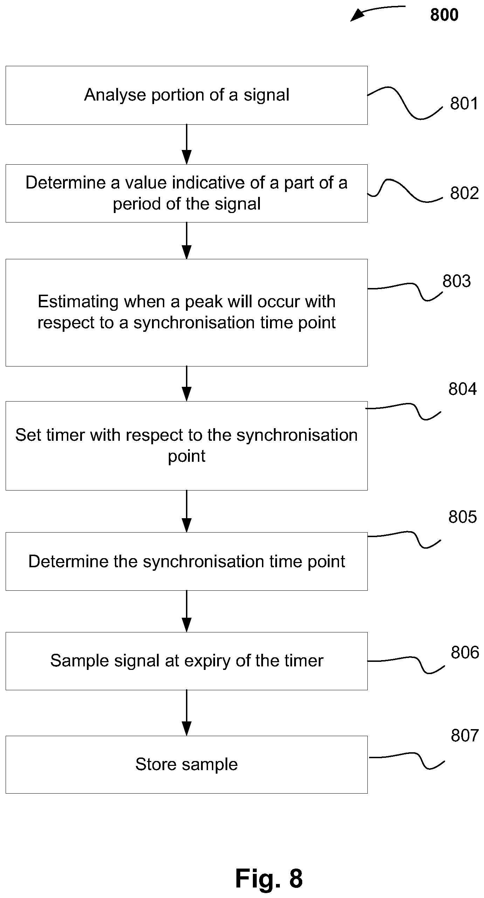

With reference to Figure 9, a motor vehicle is shown comprising a vehicle parking assistance system. The vehicle parking assistance system may be used to aid in the parking of the vehicle. The motor vehicle 91 may comprise the system 1 of Figure 1 and also a user interface 92 for informing a user of the vehicle, and/or a control system of the vehicle, about potential obstacles in the vicinity of the vehicle. The user interface 92 may be a graphical user interface or an audio-visual interface. It will be appreciated that the motor vehicle will also comprise a large number of additional components. The motor vehicle may for example be a car.

The description of the various aspects and embodiments of the present invention has been presented for purposes of illustration and description, but is not intended to be exhaustive or to limit the invention to the forms disclosed. A number of alternatives and optional features have been described and it will be appreciated that any optional feature or alternative may be combined with any other optional features and alternatives described and the disclosure includes the various combinations and configurations of optional features and alternatives. It will be understood that the scope of the present invention is not limited to the particular arrangements set out herein and instead extends to encompass all arrangements, and modifications and alterations thereto, which fall within the scope of the appended claims.

For example it will be appreciated that although the system has been described with respect to a vehicle parking assistance system, the system can be any distance control/measurement system using ultrasound technology, including outside the automotive field, for example a system to provide assistance for boarding stairs for aircrafts. The system may be any low speed manoeuvring assistance system. Moreover, it will be appreciated that the oscillating signal does not have to be derived from on an ultrasound signal. The method and apparatus can be used in any system where the envelope of an oscillating signal with a slowly varying frequency is reconstructed.

Moreover, although a specific implementation and timing diagrams for obtaining the envelope signal have been described it will be appreciated that the implementation and timing diagrams are just examples. In other implementations and embodiments, the synchronisation time points may be determined in other ways or at other times of the oscillating signal or the timings of the predicted peaks may be estimated at absolute times instead of with respect to synchronisation time points. Moreover, in some implementations, the control arrangement may not control the ADC to sample all of the positive or negative peaks provided that it controls the ADC to sample a sufficient number of peaks to accurately reconstruct the envelope of the oscillating signal.

Although specific implementations of the system and the components of the system have been described with respect to the drawings, it will be appreciated that other implementations are possible and the system may comprise additional and/or alternative components. For example, the sampling of the signal does not have to be carried out by an ADC. Instead, any module or element for sampling the signal may be used. Moreover, although in some examples some of the components have been described or indicated to operate in the digital domain, in some implementations, the system may be designed such that more of the control and sampling take place in the analogue domain.

Moreover, when the system of Figure 1 is a vehicle parking assistance system, it will be appreciated that the system will comprise a large number of additional components which have been excluded from Figure 1 for the sake of clarity.

## Claims

1. Apparatus (1) comprising:
a control arrangement (13) being configured:
- to analyse a portion (33) of an oscillating signal (23) to determine a value indicative of a frequency or at least a part of a period (34) of the oscillating signal (23);
- to use said value to schedule sampling of the signal within a time period within a cycle (37) of the oscillating signal, corresponding to a region (32) around a maximum deviation (35) from a reference value within that cycle (37), to obtain a sample for reconstructing an envelope (25) of the oscillating signal; and
- to schedule the sampling at a time interval (39) after a synchronisation time point, the time interval (39) being derived from the value indicative of a frequency or at least a part of a period of the oscillating signal (23),
**characterized in that**
the control arrangement (13) comprises a timer (43),
wherein the timer (43) is configured to schedule the sampling at the end of said time interval (39) measured from the synchronisation time point (38a, 38b),
wherein the control arrangement (13) is configured to set the timer to overflow at the end of the time interval and the control arrangement (13) is arranged to control a converter (15) to sample the signal when the timer (43) overflows.

2. Apparatus according to claim 1, wherein the synchronisation time point (38a, 38b) is a first synchronisation time point (38a) and the timer (43) is operable to time said portion (33) of the oscillating signal (23) from a corresponding first synchronisation time point (38a) in a previous cycle to a second synchronisation time point (38b) in that previous cycle to obtain the value indicative of a frequency or at least a part of the period.

3. Apparatus according to claim 1 or 2, wherein the control arrangement (13) comprises a comparator (41) to establish the, or each, synchronisation time point (38a, 38b) based on a comparison of the oscillating signal (23) with a reference signal (IN-).

4. Apparatus according to claim 3, wherein the control arrangement is configured to trigger an interrupt routine on detection of a falling or rising edge of an output signal (51) of the comparator (41) and the interrupt routine is arranged to cause the control arrangement (13) to determine the value indicative of a frequency or at least a part of the period and to set the timer (43) accordingly.

5. Apparatus according to any one of the preceding claims, further comprising an analogue to digital converter ADC (15) for sampling the oscillating signal in accordance with the scheduling.

6. Apparatus according to claim 5, wherein the apparatus comprises a microcontroller comprising the control arrangement (13) and the converter (15).

7. Apparatus according to claim 5 or 6, wherein the control arrangement is further arranged to trigger an interrupt routine at the end of a conversion of the analogue to digital converter ADC (15), the interrupt routine being arranged to cause the output of the converter to be saved in memory (17).

8. Apparatus according to claim 5, 6 or 7, wherein the apparatus further comprises a transducer (2) to transduce the echo of an ultrasonic signal into an electrical signal, the oscillating signal (23) being derived from said electrical signal.

9. Apparatus according to claim 8 further comprising one or more processors for analysing an envelope (25) of the oscillating signal (23) based on the samples output from the converter (15) to detect objects (3) in the vicinity of the transducer (2).

10. A vehicle parking assistance system comprising the apparatus according to any one of claims 1 to 9.

11. A motor vehicle comprising a vehicle parking assistance system according to claim 10.

12. A method of generating an envelope signal (25) for an oscillating signal (23) comprising:
analysing a portion (33) of the oscillating signal (23) to determine a value indicative of a frequency or at least a part of a period of the oscillating signal (23);
estimating, for a cycle of the oscillating signal (23), when the oscillating signal will be at a maximum deviation (35) from a reference value within that cycle using the determined value; and
sampling the signal in accordance with the estimation, the sampling being scheduled at a time interval (39) after a synchronisation time point (38a; 38b), the time interval being derived from the value indicative of a frequency or at least a part of a period of the oscillating signal (23), wherein a timer (43) is configured to schedule the sampling at the end of said time interval (39) by setting the timer (43) to overflow at the end of the time interval (39).

13. A computer program comprising computer readable instructions that when executed by one or more processors cause the one or more processors to carry out a method according to claim 12.

14. A non-transient computer readable medium having a computer program according to claim 13 stored thereon.

## Patentansprüche

1. Vorrichtung (1), umfassend:
eine Steueranordnung (13), die für Folgendes konfiguriert ist:
- Analysieren eines Anteils (33) eines oszillierenden Signals (23), um einen Wert zu bestimmen, der eine Frequenz oder zumindest einen Teil einer Periode (34) des oszillierenden Signals (23) anzeigt;
- Verwenden des Wertes dazu, das Abtasten des Signals innerhalb eines Zeitraumes innerhalb eines Zyklus (37) des oszillierenden Signals, der einem Bereich (32) um eine maximale Abweichung (35) von einem Bezugswert herum innerhalb jenes Zyklus (37) entspricht, zeitlich zu planen, um einen Abtastwert für das Rekonstruieren einer Hüllkurve (25) des oszillierenden Signals zu erhalten; und
- zeitliches Planen des Abtastens in einem Zeitintervall (39) nach einem Synchronisierungszeitpunkt, wobei das Zeitintervall (39) von dem Wert abgeleitet ist, der eine Frequenz oder zumindest einen Teil einer Periode des oszillierenden Signals (23) anzeigt,
**dadurch gekennzeichnet, dass**
die Steueranordnung (13) einen Timer (43) umfasst,
wobei der Timer (43) so konfiguriert ist, dass er das Abtasten am Ende des Zeitintervalls (39), gemessen ab dem Synchronisierungszeitpunkt (38a, 38b), zeitlich plant,
wobei die Steueranordnung (13) so konfiguriert ist, dass sie den Timer so einstellt, dass er am Ende des Zeitintervalls überläuft, und die Steueranordnung (13) so eingerichtet ist, dass sie einen Wandler (15) so steuert, dass er das Signal abtastet, wenn der Timer (43) überläuft.

2. Vorrichtung nach Anspruch 1, wobei der Synchronisierungszeitpunkt (38a, 38b) ein erster Synchronisierungszeitpunkt (38a) ist und der Timer (43) so betriebsfähig ist, dass er den Anteil (33) des oszillierenden Signals (23) von einem entsprechenden ersten Synchronisierungszeitpunkt (38a) in einem vorherigen Zyklus bis zu einem zweiten Synchronisierungszeitpunkt (38b) in jenem vorherigen Zyklus zeitlich plant, um den Wert zu erhalten, der eine Frequenz oder zumindest einen Teil der Periode anzeigt.

3. Vorrichtung nach Anspruch 1 oder 2, wobei die Steueranordnung (13) einen Komparator (41) umfasst, um den oder jeden Synchronisierungszeitpunkt (38a, 38b) auf der Grundlage eines Vergleiches des oszillierenden Signals (23) mit einem Bezugssignal (IN-) festzulegen.

4. Vorrichtung nach Anspruch 3, wobei die Steueranordnung so konfiguriert ist, dass sie bei Detektion einer fallenden oder steigenden Flanke eines Ausgangssignals (51) des Komparators (41) eine Unterbrechungsroutine auslöst, und die Unterbrechungsroutine so eingerichtet ist, dass sie bewirkt, dass die Steueranordnung (13) den Wert bestimmt, der eine Frequenz oder zumindest einen Teil der Periode anzeigt, und den Timer (43) dementsprechend einstellt.

5. Vorrichtung nach einem der vorangehenden Ansprüche, ferner umfassend einen Analog-Digital-Wandler, ADC, (15) zum Abtasten des oszillierenden Signals gemäß der zeitlichen Planung.

6. Vorrichtung nach Anspruch 5, wobei die Vorrichtung einen Mikrokontroller umfasst, der die Steueranordnung (13) und den Wandler (15) umfasst.

7. Vorrichtung nach Anspruch 5 oder 6, wobei die Steueranordnung ferner so eingerichtet ist, dass sie am Ende einer Umwandlung des Analog-Digital-Wandlers ADC (15) eine Unterbrechungsroutine auslöst, wobei die Unterbrechungsroutine so eingerichtet ist, dass sie bewirkt, dass die Ausgabe des Wandlers in einem Speicher (17) gespeichert wird.

8. Vorrichtung nach Anspruch 5, 6 oder 7, wobei die Vorrichtung ferner einen Messwandler (2) umfasst, um das Echo eines Ultraschallsignals in ein elektrisches Signal umzuwandeln, wobei das oszillierende Signal (23) von dem elektrischen Signal abgeleitet ist.

9. Vorrichtung nach Anspruch 8, ferner umfassend einen oder mehrere Prozessoren zum Analysieren einer Hüllkurve (25) des oszillierenden Signals (23) auf der Grundlage der aus dem Wandler (15) ausgegebenen Abtastwerte, um Objekte (3) in der Nähe des Messwandlers (2) zu detektieren.

10. Fahrzeugparkassistenzsystem, umfassend die Vorrichtung nach einem der Ansprüche 1 bis 9.

11. Kraftfahrzeug, umfassend ein Fahrzeugparkassistenzsystem nach Anspruch 10.

12. Verfahren zur Erzeugung eines Hüllkurvensignals (25) für ein oszillierendes Signal (23), umfassend:
Analysieren eines Anteils (33) des oszillierenden Signals (23), um einen Wert zu bestimmen, der eine Frequenz oder zumindest einen Teil einer Periode des oszillierenden Signals (23) anzeigt;
Schätzen, für einen Zyklus des oszillierenden Signals (23), wann das oszillierende Signal sich innerhalb jenes Zyklus bei einer maximalen Abweichung (35) von einem Bezugswert befinden wird, unter Verwendung des bestimmten Wertes; und
Abtasten des Signals gemäß der Schätzung, wobei das Abtasten in einem Zeitintervall (39) nach einem Synchronisierungszeitpunkt (38a; 38b) zeitlich geplant wird, wobei das Zeitintervall von dem Wert abgeleitet wird, der eine Frequenz oder zumindest einen Teil einer Periode des oszillierenden Signals (23) anzeigt, wobei ein Timer (43) so konfiguriert ist,
dass er das Abtasten am Ende des Zeitintervalls (39) durch Einstellen des Timers (43), so dass er am Ende des Zeitintervalls (39) überläuft, zeitlich plant.

13. Computerprogramm, umfassend computerlesbare Anweisungen, die, wenn sie durch einen oder mehrere Prozessoren ausgeführt werden, bewirken, dass der eine oder die mehreren Prozessor/en ein Verfahren nach Anspruch 12 durchführt/durchführen.

14. Nichtflüchtiger computerlesbarer Datenträger, auf dem ein Computerprogramm nach Anspruch 13 gespeichert ist.

## Revendications

1. Appareil (1) comprenant :
un dispositif de commande (13) étant configuré :
- pour analyser une partie (33) d'un signal oscillant (23) pour déterminer une valeur indicative d'une fréquence ou au moins d'une partie d'une période (34) du signal oscillant (23) ;
- pour utiliser ladite valeur pour ordonnancer l'échantillonnage du signal au cours d'une période temporelle au cours d'un cycle (37) du signal oscillant, correspondant à une région (32) autour d'une déviation maximum (35) par rapport à une valeur de référence au cours de ce cycle (37), en vue d'obtenir un échantillon pour reconstruire une enveloppe (25) du signal oscillant ; et
- pour ordonnancer l'échantillonnage à un intervalle de temps (39) après un instant de synchronisation, l'intervalle de temps (39) étant dérivé à partir de la valeur indicative d'une fréquence ou au moins d'une partie d'une période du signal oscillant (23),
**caractérisé en ce que**
le dispositif de commande (13) comprend une horloge (43),
l'horloge (43) étant configurée pour ordonnancer l'échantillonnage à la fin du susdit intervalle de temps (39) mesuré à partir de l'instant de synchronisation (38a, 38b),
le dispositif de commande (13) étant configuré pour régler l'horloge pour dépasser à la fin de l'intervalle de temps et le dispositif de commande (13) étant conçu pour commander à un convertisseur (15) d'échantillonner le signal lorsque l'horloge (43) est en dépassement.

2. Appareil selon la revendication 1, l'instant de synchronisation (38a, 38b) étant un premier instant de synchronisation (38a) et l'horloge (43) étant utilisable pour chronométrer ladite partie (33) du signal oscillant (23) d'un premier instant de synchronisation (38a) correspondant au cours d'un cycle précédent à un deuxième instant de synchronisation (38b) au cours de ce cycle précédent, en vue d'obtenir la valeur indicative d'une fréquence ou au moins d'une partie de la période.

3. Appareil selon la revendication 1 ou 2, le dispositif de commande (13) comprenant un comparateur (41) pour établir le, ou chaque, instant de synchronisation (38a, 38b) basé sur une comparaison du signal oscillant (23) avec un signal de référence (IN-).

4. Appareil selon la revendication 3, le dispositif de commande étant configuré pour déclencher une routine d'interruption en cas de détection d'un front descendant ou montant d'un signal de sortie (51) du comparateur (41) et la routine d'interruption étant conçue pour faire en sorte que le dispositif de commande (13) détermine la valeur indicative d'une fréquence ou au moins d'une partie de la période et régler l'horloge (43) de façon corrélative.

5. Appareil selon l'une quelconque des revendications précédentes, comprenant en outre un convertisseur analogique-numérique, ADC, (15) pour échantillonner le signal oscillant conformément à l'ordonnancement.

6. Appareil selon la revendication 5, l'appareil comprenant un microcontrôleur comprenant le dispositif de commande (13) et le convertisseur (15).

7. Appareil selon la revendication 5 ou 6, le dispositif de commande étant en outre conçu pour déclencher une routine d'interruption à la fin d'une conversion du convertisseur analogique-numérique ADC (15), la routine d'interruption étant conçue pour faire en sorte que la sortie du convertisseur soit enregistrée en mémoire (17).

8. Appareil selon la revendication 5, 6 ou 7, l'appareil comprenant en outre un transducteur (2) pour transformer l'écho d'un signal ultrasonique en un signal électrique, le signal oscillant (23) étant dérivé du susdit signal électrique.

9. Appareil selon la revendication 8 comprenant en outre un ou plusieurs possesseurs pour analyser une enveloppe (25) du signal oscillant (23) basé sur les échantillons sortis par le convertisseur (15) pour détecter des objets (3) dans la proximité du transducteur (2).

10. Système d'aide au stationnement de véhicule comprenant l'appareil selon l'une des revendications 1 à 9.

11. Véhicule à moteur comprenant un système d'aide au stationnement de véhicule selon la revendication 10.

12. Procédé de génération d'un signal d'enveloppe (25) pour un signal oscillant (23) comprenant :
analyser une partie (33) du signal oscillant (23) pour déterminer une valeur indicative d'une fréquence ou au moins d'une partie d'une période du signal oscillant (23) ;
estimer, pour un cycle du signal oscillant (23), lorsque le signal oscillant sera à une déviation maximum (35) par rapport à une valeur de référence au cours de ce cycle en utilisant la valeur déterminée ; et
échantillonner le signal conformément à l'estimation, l'échantillonnage étant ordonnancé à un intervalle de temps (39) après un instant de synchronisation (38a ; 38b), l'intervalle de temps étant dérivé de la valeur indicative d'une fréquence ou au moins d'une partie d'une période du signal oscillant (23), une horloge (43) étant configurée pour ordonnancer l'échantillonnage à la fin du susdit intervalle de temps (39) en réglant l'horloge (43) pour dépasser à la fin de l'intervalle de temps (39).

13. Programme informatique comprenant des instructions lisibles par ordinateur, lesquelles, lorsque exécutées par un ou plusieurs processeurs, déclenchent l'exécution d'un procédé selon la revendication 12 par les un ou plusieurs processeurs.

14. Support non transitoire lisible par ordinateur ayant un programme informatique selon la revendication 13 y étant enregistré.
